(19) Europäisches Patentamt

European Patent Office

Office européen des brevets

(11) Veröffentlichungsnummer: **0 305 701 B1**

(12) **EUROPÄISCHE PATENTSCHRIFT**

(45) Veröffentlichungstag der Patentschrift: **25.11.92**

(21) Anmeldenummer: **88111281.7**

(22) Anmeldetag: **14.07.88**

(51) Int. Cl.⁵: **H04M 3/60**, H04Q 3/545

(54) Schaltungsanordnung für den Betrieb von Bedien- oder Abfrageplätzen an zentral gesteuerten Fernsprechvermittlungsanlagen, insbesondere Makler-Vielfachanlagen.

(30) Priorität: **01.09.87 DE 3729133**

(43) Veröffentlichungstag der Anmeldung:
**08.03.89 Patentblatt 89/10**

(45) Bekanntmachung des Hinweises auf die
Patenterteilung:
**25.11.92 Patentblatt 92/48**

(84) Benannte Vertragsstaaten:
**AT BE CH ES FR GB IT LI LU NL**

(56) Entgegenhaltungen:
**WO-A-86/02219**
**DE-A- 3 306 680**
**US-A- 4 585 908**

**INTERNATIONAL CONFERENCE ON COMM-
UNICATIONS '86, Toronto, Canada, 22.-25.
Juni 1986, Band 2, Seiten 39.8.1-39.8.3, IEEE;
J. JAGGERNAUTH et al.: "ISDN attendant
console"**

(73) Patentinhaber: **TELENORMA GMBH
Mainzer Landstrasse 128-146
W-6000 Frankfurt/Main(DE)**

(72) Erfinder: **Schmidt, Heinz
Egerstrasse 18
W-7120 Bietigheim-Bissingen(DE)**
Erfinder: **Glaser, Ulrich
Albatrosweg 9
W-7000 Stuttgart 31(DE)**

## Beschreibung

Die Erfindung betrifft eine Schaltungsanordnung für den Betrieb von Bedien- oder Abfrageplätzen an zentral gesteuerten Fernsprechvermittlungsanlagen insbesondere Makler-Vielfachanlagen nach dem Oberbegriff des Patentanspruchs 1.

Aus der DE-OS 30 34 987 ist eine Schaltungsanordnung zum Betreiben von Abfrageplätzen bekannt. Es ist eine besondere Steuereinrichtung vorgesehen, um den Datenaustausch zwischen der zentralen Steuereinrichtung der Vermittlungsanlage und den Abfrageplätzen zu steuern. Mit den von der zentralen Steuereinrichtung der Vermittlungsanlage an die Abfrageplätze abzugebenden Informationen soll bewirkt werden, daß an den Abfrageplätzen aktuelle Signale erscheinen und Anzeigen über die Art von ankommenden und bestehenden Verbindungen erscheinen. In umgekehrter Richtung sollen die von den Abfrageplätzen aus per Tastendruck gegeben Kommandos der zentralen Steuereinrichtung übermittelt werden. Den einzelnen Funktionstasten an den Abfrageplätzen ist dabei im allgemeinen eine Bedeutung fest zugeordnet. Änderungen der Tastenfunktionen sind bei Bedarf an jedem Abfrageplatz durch besondere Prozeduren vorzunehmen.

Aus der DE-OS 28 26 983 ist eine Schaltungsanordnung für die freie Zuordnung von Merkmalen zu Sondertasten an Vermittlungsplätzen von Fernmelde-, insbesondere Fernsprechvermittlungsanlagen bekannt. Dabei ist für die Zuordnung von Merkmalen zu Bedienungstasten ein Diodenfeld vorgesehen, wobei jeder einzelnen Taste eine Diodenzeile zugeordnet ist. Durch die besondere Beschaltung dieser Diodenzeile wird ein Binärwert ausgegeben, welcher die Anfangsadresse eines in einem Programmspeicher abgelegten Merkmalprogrammes bildet, das auf diese Weisemittelbar durch die Tastenbetätigung aktiviert werden soll. Wenn nun die Funktionszuweisung einer derartigen Funktionstaste geändert werden soll, so ist in der betreffenden Diodenzeile die Anordnung der Dioden zu ändern, damit durch eine geänderte Codierung ein anderer Binärwert ausgegeben wird.

Die Aufgabe der vorliegenden Erfindung besteht darin, eine Schaltungsanordnung anzugeben, womit die Funtionszuweisungen zu Funktionstasten und insbesondere die Zielzuordnungen zu Zieltasten zentral verwaltet werden kann und auch von zentraler Stelle aus durchführbar ist. Der Betrieb von Fernsprechvermittlungsanlagen, insbesondere von Malker-Vielfachanlagen mit einer Vielzahl von Bedien- oder Abfrageplätzen soll dadurch wesentlich erleichtert werden.

Zur Lösung dieser Aufgabe ist eine Merkmalskombination vorgesehen, wie sie im Patentanspruch 1 angegeben ist.

Damit wird in vorteilhafter Weise erreicht, daß insbesondere bei der Inbetriebnahme einer Anlage von zentraler Stelle aus die Funktionszuweisungen und Zielzuordnungen für die Bedientasten aller Bedien- oder Abfrageplätze zentral erstellt werden können. Die Möglichkeit, auch von einem einzelnen Bedien- oder Abfrageplatz aus Funktions- und Zielzuordnungen zu ändern, bleibt dabei erhalten. Derartige dezentral durchgeführte Änderungen werden zusätzlich an zentraler Stelle abgespeichert, so daß der jeweils aktuelle Stand der gesamten Vermittlungsanlage jeder Zeit verfügbar ist. Weiterbildungen der Erfindung ergeben sich aus den Unteransprüchen.

Ein Ausführungsbeispiel der Erfindung wird nachfolgend anhand von Zeichnungen näher erläutert.
Es zeigt:

Fig. 1    das Blockschaltbild der gesamten Schaltungsanordnung.

Fig. 2    das interne Blockschaltbild der Netzwerksteuerung.

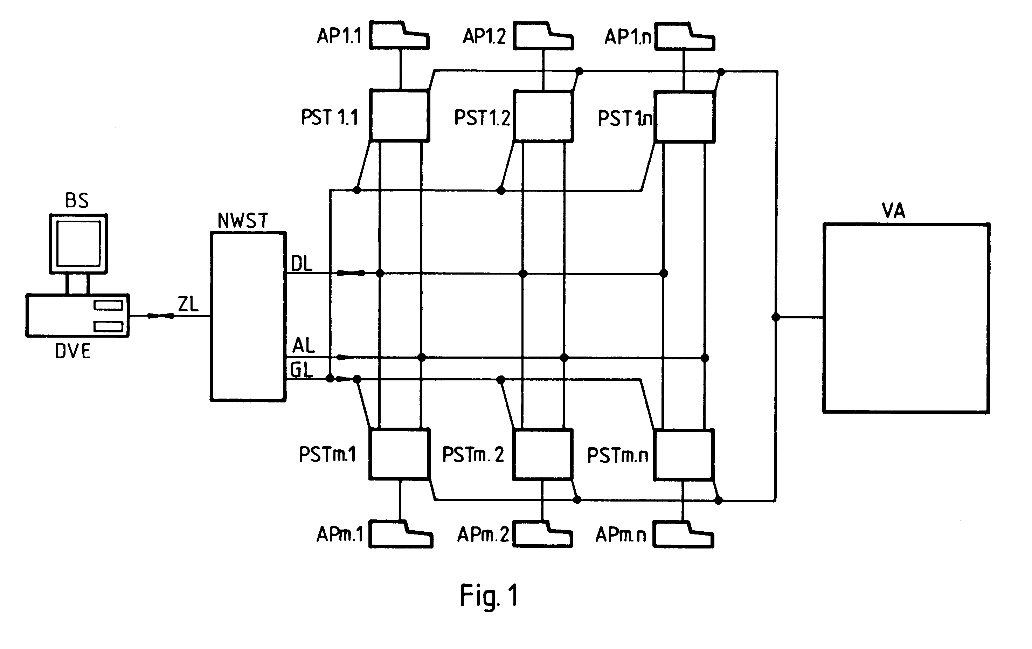

In der Fig. 1 ist dargestellt, wie Bedien- oder Abfrageplätze AP1.1 bis APm.n über jeweils zugehörige Platzsteuerungen PST1.1 bis PSTm.n mit einer Vermittlungsanlage VA verbunden sind. Zwischen der Vermittlungsanlage VA und den Bedien- oder Abfrageplätzen AP findet, wie dies eingangs beschrieben ist, ein Informationsaustausch statt, um einerseits Anzeige- und Signaleinrichtungen bei den Bedien- oder Abfrageplätzen AP in Tätigkeit zu setzen, und andererseits zu bewirken, daß Tastenbetätigungen von den Bedien- oder Abfrageplätzen aus zu den gewünschten Funktionen innerhalb der Vermittlungsanlage VA führen.

Die Platzsteuerungen PST1.1 bis PSTm.n sind außerdem über Datenleitungen DL und Adreßleitungen AL, GL mit einer Netzwerksteuerung NWST verbunden. Dabei sind die Datenleitungen DL dafür ausgelegt, einen seriellen Datenaustausch in beiden Richtungen zu ermöglichen und parallel an die Platzsteuerungen PST herangeführt. Bei den Adreßleitungen AL, GL sind die Einzeladreßleitungen AL ebenfalls parallel an die einzelnen Platzsteuerungen PST1.1 bis PSTm.n herangeführt. Mit den Gruppen-Adreßleitungen GL kann jeweils eine Gruppe von Platzsteuerungen, z.B. PST1.1 bis PST1.n. gezielt selektiert werden. Durch das Zusammenwirken der Adreßleitungen AL und GL ergibt sich, daß jeweils eine ganz bestimmte Platzsteuerung, z.B. PST1.1 von der Netzwerksteuerung NWST aus gezielt angesteuert werden kann.

An die Netzwerksteuerung NWST ist außerdem über eine Zentralleitung ZL eine Datenverarbeitungseinrichtung DVE angeschlossen. Hier kann es sich um einen handelsüblichen Personalcomputer handeln, der eine genormte seriell doppeltgerichtet arbeitende Schnittstelle besitzt. Die Netzwerksteuerung NWST ist so beschaffen, daß bei Bedarf Daten sowohl von der Datenverarbeitungseinrichtung DVE gezielt zu jeder einzelnen Platzsteuerung PST übertragen werden können, und daß auch von den Platzsteuerungen PST ausgehend eine Datenübertragung zu der zentralen Datenverarbeitungseinrichtung DVE stattfinden kann.

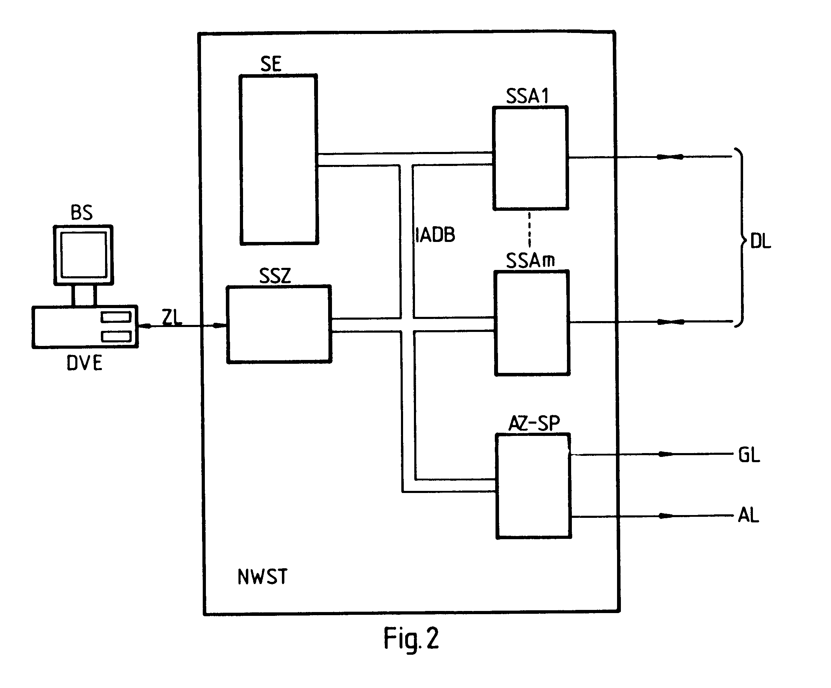

Anhand der Fig. 2 wird nun beschrieben, auf welche Weise eine Funktions- und insbesondere Zielzuordnung zu Funktions- oder Zieltasten an den Bedien- oder Abfrageplätzen AP durchgeführt werden kann. Zunächst sei angenommen, daß eine mit vielen Bedien- oder Abfrageplätzen AP1.1 bis APm.n ausgestattete Vermittlungsanlage VA, insbesondere Makler-Vielfachanlage neu eingerichtet wird. Dabei ist es zweckmäßig, insbesondere die Zielzuweisungen zu den Zieltasten an zentraler Stelle vorzunehmen. Mit der Datenverarbeitungseinrichtung DVE, beispielsweise einem handelsüblichen Personal-Computer, werden für jeden einzelnen Bedien- oder Abfrageplatz, beispielsweise AP1.1, individuelle Dateien erstellt. Dabei werden mit Hilfe eines der Datenverarbeitungseinrichtung DVE zugeordneten Bildschirmes BS, wo jeweils eine oder mehrere Tastenpositionen erscheinen, die Zielbezeichnungen und die jeweils dazugehörigen Rufnummern eingetragen. Auf diese Weise wird das gesamte Zieltastenfeld und möglicherweise auch Tastenblöcke für andere Funktionen bearbeitet, so daß jede einzelne Taste ihre zugeordnete Funktion und Bezeichnung erhält. Diese jeweils den Bedien- oder Abfrageplätzen AP1.1 bis APm.n und damit den jeweiligen Platzsteuerungen PST1.1 bis PSTm.n zugeordneten Dateien werden zunächst zentral gespeichert. Sie können außerdem in bekannter Weise auf ein permanentes Speichermedium, beispielsweise Diskette, gebracht werden und auch in Listenform ausgedruckt werden. Wenn eine derartige Bearbeitung an zentraler Stelle für mindestens einen Bedien- oder Abfrageplatz, oder für eine Gruppe von Bedien- oder Abfrageplätzen, beispielsweise AP1.1 bis AP1.n, oder auch für alle Beidien- oder Abfrageplätze AP abgeschlossen ist, wird eine Datenübertragung zu den Platzsteuerungen PST eingeleitet.

Dabei wird über die Zentralleitung ZL die zentrale serielle Schnittstelle SSZ angesteuert, womit die innerhalb der Netzwerksteuerung NWST befindliche Steuereinrichtung SE angereizt wird. Die Adresse jedes einzelnen Bedien- oder Abfrageplatzes gelangt dabei zusammen mit den jeweils zu übertragenden Daten über einen internen Adreß- und Datenbus IADB zu der besagten Steuereinrichtung SE. Es laufen dabei Programme ab, in deren Verlauf jeweils die Adresse eines Bedien-oder Abfrageplatzes AP bzw. die Adresse von dessen Platzsteuerung PST in einen Adressen-Zwischenspeicher AZ-SP abgespeichert wird. Über die breits beschriebenen Adreßleitungen AL ung GL wird die betreffende Platzsteuerung angesteuert und erhält über eine der seriellen Schnittstellen SSA1 bis SSAm alle Daten, die für sie bestimmt sind, seriell zugesendet.

Die seriellen Schnittstellen SSA1 bis SSAm können entweder für eine oder auch für mehrere Gruppen von Platzsteuerungen PST1.1 bis ST1.n vorhanden sein. Die an dieser Stelle gewählte Zuordnung hängt lediglich davon ab, wie groß die Belastbarkeit des Ausgangstreibers der betreffenden Schnittstelle SSA ist. Die Schnittstellen als solche sind jeweils untereinander gleich.

Wenn die zu den Platzsteuerungen PST zu übertragenden Daten vorher mit Hilfe der Datenverarbeitungseinrichtung DVE in der zuvor beschriebenen Form ordnungsgemäß aufbereitet worden sind und auch mögliche Fehler korrigiert worden sind, so können in relativ kurzer Zeit alle Platzsteuerungen PST mit den notwendigen Daten versorgt werden, so daß die gesamte Vermittlungsanlage VA schnell betriebsbereit ist. Selbstverständlich lassen sich auf die gleiche Weise an zentraler Stelle auch nachträgliche Änderungen durchführen.

Nachträgliche Änderungen können jedoch auch von einem Bedien- oder Abfrageplatz, beispielsweise AP1.1, ausgehend durchgeführt werden. In diesem Fall sind entsprechend der Bedienungsanleitung verschiedene besondere Tastendrücke notwendig, wobei zunächst Eingaben in einen besonderen Speicher der zugehörigen Platzsteuerung PST1.1 erfolgen. Nach Abschluß einer derartigen Eingabeprozedur wird in nicht dargestellter Weise ein Anreiz für die innerhalb der Netzwerksteuerung NWST befindliche Steuereinrichtung SE erzeugt. Daraufhin wird von dieser Steuereinrichtung SE aus die betreffende Platzsteuerung PST1.1 adressiert, damit eine Datenübertragung über die Datenleitungen DL ermöglicht wird. Mit Hilfe der Steuereinrichtung SE gelangen dann die Daten über die zentrale serielle Schnittstelle SSZ zur Datenverarbeitungseinrichtung DVE, wo sie zentral abgespeichert werden. Die Steuereinrichtung SE innerhalb der Netzwerksteuerung NWST ist außerdem so ausgelegt, daß routinemäßig alle Platzsteuerungen PST1.1 bis PSTm.n zyklisch angesteuert werden, um inzwischen eingetretene Änderungen zur zentralen Datenverarbeitungseinrichtung DVE hin zu übertragen. Dabei wird jeweils festgestellt, ob in einem besonderen Änderungsspeicher Daten abgelegt sind. Ist dies nicht der Fall, so wird sofort die nächste Platzsteuerung PST adressiert. Auf diese Weise wird innerhalb der zentralen Datenverarbeitungseinrichtung DVE der gesamte Datenbestand immer auf dem neuesten Stand gehalten, so daß es nicht unbedingt erforderlich ist, eine Datenübertragung von einem Bedien- oder Abfrageplatz AP aus einzuleiten.

Das Vorhandensein der jeweils aktuellen Daten an zentraler Stelle hat auch weiterhin den Vorteil, daß im Falle einer Störung einer Platzsteuerung PST oder eines Bedien- oder Abfrageplatzes AP diese Einrichtungen in sehr kurzer Zeit wieder betriebsfähig sind, sobald die Störung behoben ist. Es ist dann nämlich, wie bereits zuvor beschrieben, lediglich erforderlich, daß von der Datenverarbeitungseinrichtung DVE aus eine Datenübertragung zu der betreffenden Platzsteuerung PST hin bewirkt wird.

**Patentansprüche**

1. Schaltungsanordnung für den Betrieb von Bedien- oder Abfrageplätzen an zentral gesteuerten Fernsprechvermittlungsanlagen, insbesondere Makler-Vielfachanlagen, wobei für jeden Abfrageplatz eine Platzsteuerung vorgesehen ist, die mit der zentralen Steuereinrichtung der Vermittlungsanlage zum Zweck des Informationsaustausches zwischen den Bedien- oder Abfrageplätzen und der zentralen Steuerung der Vermittlungsanlage verbunden ist, damit die Anzeigeeinrichtungen des jeweiligen Bedien- oder Abfrageplatzes gesteuert werden können und die Betätigungen von Tasten am Bedien- oder Abfrageplatz entsprechende Prozeduren in der Vermittlungsanlage bewirken können,
dadurch gekennzeichnet,
daß eine zusätzliche Netzwerksteuerung (NWST) vorgesehen ist, die unabhängig von der Vermittlungsanlage (VA) arbeitet und Datenverbindungen zwischen den Platzsteuerungen (PST) und einer zentralen Datenverarbeitungseinrichtung (DVE) herstellt, wobei Daten für die Zuweisung von Funktionen und/oder Zielrufnummern zu den Bedientasten der Bedien- oder Abfrageplätze (AP) zwischen der zentralen Datenverarbeitungseinrichtung (DVE) und den Platzsteuerungen (PST) ausgetauscht werden.

2. Schaltungsanordnung nach Anspruch 1,
dadurch gekennzeichnet,
daß die in der zentralen Datenverarbeitungseinrichtung (DVE) erstellten Daten über die Netzwerksteuerung (NWST) jeweils gezielt zu einer zu diesem Zweck adressierten Platzsteuerung (PST) übertragen werden.

3. Schaltungsanordnung nach Anspruch 1,
dadurch gekennzeichnet,
daß eine Datenübertragung zur zentralen Datenverarbeitungseinrichtung (DVE) stattfindet, wenn durch Betätigung von Bedientasten am Abfrageplatz (AP) Änderungen der Funktions- oder Zielzuweisung an Bedientasten vorgenommen werden.

4. Schaltungsanordnung nach Anspruch 1,
dadurch gekennzeichnet,
daß von der Netzwerksteuerung (NWST) aus eine zyklische Abtastung der Platzsteuerungen (PST) erfolgt, um geänderte Daten zur zentralen Datenverarbeitungseinrichtung (DVE) zu übertragen.

5. Schaltungsanordnung nach Anspruch 1,
dadurch gekennzeichnet,
daß bei Arbeitsplatzwechsel von jedem Bedien- oder Abfrageplatz (AP) aus Ziele und Funktionen des bisherigen Arbeitsplatzes dem neuen Bedien- oder Abfrageplatz (AP) über die Datenverarbeitungseinrichtung (DVE) zuordenbar sind.

6. Schaltungsanordnung nach Anspruch 1,
dadurch gekennzeichnet,
daß in der Datenverarbeitungseinrichtung (DVE) den Platzsteuerungen (PST) zugeordnet Dateien erstellt werden, um die Daten optimal an zentraler Stelle ablegen zu können.

7. Schaltungsanordnung nach Anspruch 1,
dadurch gekennzeichnet,
daß zusätzliche gruppenbezogene Dateien in der zentralen Datenverarbeitungseinrichtung (DVE) erstellt werden, wenn in einzelnen Gruppen von Platzsteuerungen (PST) wenigstens zum Teil gleiche Funktionsbedingungen bei den betreffenden Bedien- oder Abfrageplätzen (AP) vorliegen.

8. Schaltungsanordnung nach Anspruch 1,
dadurch gekennzeichnet,
daß als zentrale Datenverarbeitungseinrichtung (DVE) ein handelsüblicher Personal-Computer eingesetzt wird, der über eine besondere Schnittstelle mit der Netzwerksteuerung (NWST) verbunden ist.

**Claims**

1. Circuit arrangement for the operation of operating or answering positions at centrally controlled telephone exchange installations, in particular multiple brokerage installations, wherein a position control, which is connected with the central control equipment of the exchange installation for the purpose of the information exchange between the operating or answering positions and the central control of the exchange installation, is provided for each answering position in order that the indicating equipments of the respective operating or answering position can be controlled and the actuations of keys at the operating or answering position can cause corresponding procedures in the exchange installation, characterised thereby, that an additional network control (NWST) is provided, which operates independently of the exchange installation and produces data connections between the position controls (PST) and a central data processing equipment (DVE), wherein data for the allocation of functions and/or destination telephone numbers to the operating keys of the operating or answering positions (AP) are exchanged between the central data processing equipment (DVE) and the position controls (PST).

2. Circuit arrangement according to claim 1, characterised thereby, that the data, which are set up in the central data processing equipment (DVE), are transmitted each time in targeted manner by way of the network control (NWST) to a position control addressed for this purpose.

3. Circuit arrangement according to claim 1, characterised thereby, that a data transmission to the central data processing equipment (DVE) takes place when changes in the allocation of function or destination at operating keys are undertaken through actuation of operating keys at the answering position (AP).

4. Circuit arrangement according to claim 1, characterised thereby, that a cyclic scanning of the position controls (PST) takes place from the network control (NWST) in order to transmit changed data to the central data processing equipment (DVE).

5. Circuit arrangement according to claim 1, characterised thereby, that in the case of a change of working position, destinations and functions of the previous working position are associatable with the new operating or answering position (AP) by way of the data processing equipment (DVE) from each operating or answering position (AP).

6. Circuit arrangement according to claim 1, characterised thereby, that data files associated with the position controls (PST) are set up in the data processing equipment (DVE) in order to be able to file the data optimally at a central place.

7. Circuit arrangement according to claim 1, characterised thereby, that additional group-related data files are set up in the central data processing equipment (DVE) when functional conditions, which are at least in part the same at the operating or answering positions (AP) concerned, are present in individual groups of the position controls (PST).

8. Circuit arrangement according to claim 1, characterised thereby, that a commercially usual computer, which is connected with the network control (NWST) by way of a special interface, is used as the central data processing equipment (DVE).

**Revendications**

1. Montage pour l'opération de positions de traitement d'appel ou de renseignement dans des centraux téléphoniques à commande centrale, en particulier des centraux à plusieurs positions d'opératrice, dans lequel, pour chaque position d'appel, est prévue une commande de position qui est reliée au dispositif de commande centrale du central téléphonique afin d'échanger des informations entre les positions d'appel ou de renseignement et la commande centrale du central téléphonique, de manière que les dispositifs d'affichage de chaque position d'appel ou de renseignement puissent être commandés et de manière que l'action de touches sur les positions d'appel ou de renseignement puisse lancer les procédures correspondantes dans les centraux téléphoniques, caractérisé en ce qu'une commande de réseau (NWST) additionnelle est prévue, qui travaille indépendamment du central téléphonique (VA) et qui réalise des liaisons de données entre les commandes de positions (PST) et un dispositif de traitement de données (DVE) central, de manière que des données soient échangées entre le dispositif de traitement de données central (DVE) et les commandes de positions (PST) afin d'affecter des fonctions et/ou numéros d'appel de destinations aux touches des positions d'appel ou de renseignement.

2. Dispositif selon la revendication 1, caractérisé en ce que les données établies dans le dispositif de traitement de données (DVE) central sont transmises par la commande de réseau (NWST) à destination d'une commande de position (PST) adressée à cet effet.

3. Dispositif selon la revendication 1, caractérisé en ce qu'il est prévu une transmission de données vers le dispositif de traitement de données central (DVE) lorsque, par l'action de touches à la position d'appel (AP), des modifications sont effectuées dans l'affectation de fonctions ou de destinations des touches.

4. Dispositif selon la revendication 1, caractérisé en ce qu'il est prévu un balayage cyclique des commandes de positions (PST) à partir de la commande de réseau (NWST) afin de transmettre des données modifiées vers le dispositif de traitement de données central (DVE).

5. Dispositif selon la revendication 1, caractérisé en ce que lors d'un changement de lieu de travail, les destinations et fonctions du lieu de travail antérieur sont réaménageables sur les nouvelles positions d'appel ou de renseignement (AP) à partir de chaque position d'appel ou de renseignement par l'intermédiaire du dispositif de traitement de données (DVE).

6. Dispositif selon la revendication 1, caractérisé en ce que des fichiers affectés aux commandes de positions (PST) sont établis dans le dispositif de traitement de données (DVE) afin de pouvoir distribuer des données de manière optimale en un emplacement central.

7. Dispositif selon la revendication 1, caractérisé en ce que des fichiers additionnels relatifs à des groupes sont établis dans le dispositif de traitement de données central (DVE) lorsque, dans des groupes individuels de commandes de positions (PST), au moins en partie des conditions de fonctions similaires se présentant aux positions d'appel ou de renseignement (AP) correspondantes.

8. Dispositif selon la revendication 1, caractérisé en ce qu'un ordinateur individuel du commerce se trouve utilisé comme dispositif de traitement de données central (DVE), lequel ordinateur individuel est relié à la commande de réseau (NWST) par l'intermédiaire d'un interface particulier.

Fig. 1

AP1.1 AP1.2 AP1.n

PST 1.1 PST1.2 PST1.n

BS

NWST

DVE

ZL

DL

AL

GL

PSTm.1 PSTm.2 PSTm.n

APm.1 APm.2 APm.n

VA

EP 0 305 701 B1

Fig.2